(19) Europäisches Patentamt
European Patent Office
Office européen des brevets

(11) Publication number: **0 543 511 A1**

# (12) EUROPEAN PATENT APPLICATION

(21) Application number: **92309791.9**

(51) Int. Cl.$^5$: **H04N 1/46**

(22) Date of filing: **26.10.92**

(30) Priority: **19.11.91 GB 9124490**

(43) Date of publication of application:
**26.05.93 Bulletin 93/21**

(84) Designated Contracting States:
**DE GB**

(71) Applicant: **CROSFIELD ELECTRONICS LIMITED**
**Three Cherry Trees Lane**
**Hemel Hempstead Hertfordshire HP2 7RH(GB)**

(72) Inventor: **Kirk, Richard Antony**
**65 Hemel Hempstead Road**
**Redbourn, Hertfordshire, HP2 7RH(GB)**

(74) Representative: **Skone James, Robert Edmund**
**GILL JENNINGS & EVERY, Broadgate House,**
**7 Eldon Street**
**London EC2M 7LH (GB)**

## (54) Method and apparatus for data conversion.

(57) Apparatus for converting digital data defining the colour content of pixels of an image in a first colour space into data defining the image in a second, different colour space suitable for displaying the image. The apparatus comprises dither circuit (2) for adding a dither function which varies with time to the first colour space data and for reducing the colour resolution of the data. A colour converter (3) converts the reduced colour resolution first colour space data to second colour space data.

Fig. 2.

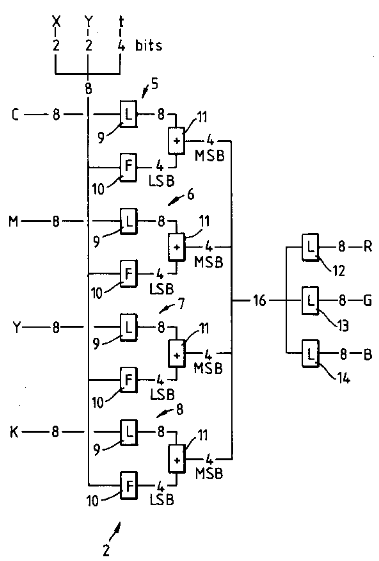




Rank Xerox (UK) Business Services
(3.10/3.6/3.3.1)

The invention relates to methods and apparatus for processing image data.

In conventional image processing, digital data defining the colour content of pixels of an image is held in the form of printing colour components, for example, cyan, magenta, yellow and black (CMYK). In order for the image to be viewed on a monitor, it is necessary to convert this data into display colour components, typically red, green and blue (RGB). It is common for the printing colour components to be held as 4 byte values per pixel and the display data as 3 byte values per pixel. In general the transform from the 4 printing coordinates to the three display coordinates cannot be expressed as a simple mathematical function. It is also impractical to store the whole transform as a look-up table. It is then necessary to store the RGB values for a representative subset of all possible CMYK values and interpolate. This requires a complex look-up table and a significant amount of time to carry out.

One way of simplifying and increasing the speed of this conversion is to approximate the full colour component values to a restricted palette, and then use the palette numbers to address the monitor format colour components in a table. To preserve the illusion of a continuous range of tones it is necessary to ensure the local average colour of the palette image approximated to the original. This may be done by propagating the error when a pixel is approximated to the nearest palette value onto the next pixel, or by adding some random or periodic dithering function. However, it has been found that in some cases, the dithering pattern is visible on the monitor. This is particularly true when the image contains spatial frequencies on or near the dithering pattern frequencies. Error propagation suffers from similar problems.

In accordance with one aspect of the present invention, a method of converting digital data defining the colour content of pixels of an image in a first colour space into data defining the image in a second, different colour space suitable for displaying the image comprises reducing the colour resolution of the data in the first colour space using a dither function which varies with time; and thereafter converting the reduced colour resolution first colour space data to the second colour space data.

In accordance with a second aspect of the present invention, apparatus for converting digital data defining the colour content of pixels of an image in a first colour space into data defining the image in a second, different colour space suitable for displaying the image comprises dither means for adding a dither function which varies with time to the first colour space data; means for reducing the colour resolution of the data; and colour conversion means for converting the reduced colour resolution first colour space data to second colour space data.

We have devised a modified dither method in which the dither function itself is varied with time. That is, when the image is to be viewed on a monitor, for example, the dither value associated with a particular colour component of a particular pixel will vary with time, typically changing with each frame.

Preferably, the dither function defines a set of dither values which, for each pixel colour component, are selected in a predetermined, repeated sequence. In general, the sequence will vary for adjacent pixels and typically the dither function will define a matrix of dither values, each cell of the matrix (corresponding to an image pixel) containing a different value at any point in time.

The dither function is selected such that the reduced colour resolution data approximately preserves the local average colour values.

Typically, the dither means comprises a set of look-up tables (LUTs) one for the or each colour component, each LUT being addressed by signals representing the location of the pixel within a dither matrix and the sampling time respectively so as to generate an appropriate dither value, the data from the look-up table being fed to an adder to which is also fed the corresponding pixel colour component data and which supplies as the reduced resolution data the four MSBs of the resulting data value. Typically, the dither values comprise 4 bits which are added to the least significant bits of the colour component data.

In the preferred example, the reduced colour resolution data can be considered to be a modified form of the original colour space data. However, broadly the invention involves the conversion of the original colour space data to a numbered set of values defining a colour palette with a reduced number of colours which may or may not be defined by the same colour components as the original data.

In some cases, the method may further comprise determining for each pixel the difference between the reduced colour resolution value for the pixel and the actual colour value to define an "error" and propagating the error to one or more other pixels prior to applying the dither function to those pixels. For example, the error caused by approximating the nth pixel can be added to the values of the n + 1th pixel before it is approximated.

The invention is applicable to monochrome and multicoloured images and in the latter case the dither means will act on each colour component separately, the resulting reduced resolution colour component data being combined and then fed to the colour conversion means.

The first colour space may define any suitable colour axis which can be interpolated to the required second colour space. Where the second colour space comprises RGB, the first colour space may include CMYK, RGB, xyz, Luz, L*a*b*, HSL, YIQ, and so on.

In general, the invention will be applied to the first colour space data after it has been stored in a frame store for display and thus after it has been zoomed, amplified and the like.

Some examples of methods and apparatus according to the invention will now be described with reference to the accompanying drawings, in which: –

Figure 1 is a block diagram of the apparatus;

Figure 2 is a block diagram illustrating the dithering and colour conversion processes of a first example; and,

Figure 3 illustrates part of the dithering apparatus shown in Figure 2 in more detail.

In this example, it is assumed that an image is represented initially by CMYK colour components each of which has 8 – bits, the colour component data being stored in a frame store 1. This data may have been generated in any conventional manner, for example by scanning an original picture, modifying this as required by an operator and then generating the final CMYK values which if necessary represent a zoomed or amplified portion of the image.

The data from the frame store 1 then passes to a dither circuit 2 to be described in more detail below in which the colour component values are modified to a reduced resolution scale C'M'Y'K', each colour component being defined by 4 – bits. The 4 – bits from each of the 4 channels are combined into 16 – bit data which is then fed to a colour converter 3 for generating RGB signals, each of 8 – bits to a monitor 4.

Figure 2 illustrates one example of the dither circuit 2 which is made up of 4 subsidiary processing circuits 5 – 8, one for each colour component CMYK. Each circuit 5 – 8 includes a look – table (LUT) 9 having an address corresponding to each possible 8 – bit input value and which stores respective 8 – bit output values representing modified colour component data at the same first resolution. A second LUT 10 is provided having $2^8$ addresses in each of which is stored a 4 – bit dither value. The 8 – bit address is made from the least significant two bits of the pixel x and y coordinates and the least significant 4 bits of an 8 bit time signal in units of frame refreshes ie. the last four bits of the frame number. The output data from the LUTs 9,10 is fed to an adder 11 which adds the 4 – bit data from the LUT 10 to the 4 – LSBs of the data from the LUT 9 and outputs the 4 – MSBs of the resultant value. Thus, the original colour data has been reduced in terms of colour resolution to sets of four colour components each represented by four bits.

The four sets of 4 – bit output values are then combined into a 16 – bit word which is applied in parallel to three LUTs 12 – 14 (corresponding to converter 3) which store 8 – bit data defining R, G, and B, colour component data respectively for feeding to the monitor 4.

As will be described below, the dither function stored by the LUTs 10 comprises a set of 16 4x4 matrices. An example of a typical matrix is set out below (letters indicate hexadecimal values).

| | X | | | |
|---|---|---|---|---|
| | 0 | C | 3 | F |
| | 8 | 4 | B | 7 |
| Y | 2 | E | 1 | D |
| | A | 6 | 9 | 5 |

Each cell of this matrix corresponds to a pixel of the original image stored in the frame store 1 and effectively the matrix is moved across the image to abutting (non – overlapping) positions maintaining its orientation X/Y parallel with the X and Y axis respectively of the original image.

In the present case, in contrast to conventional dithering in which a particular pixel in the image will see the same dither value throughout the display operation, the dither matrix is varied with time. To achieve this, 15 further matrices are generated and stored in the LUTs 10, the value in each particular cell of the set of matrices taking all possible values from 0 to 15 (decimal) once. This ensures that the total light output for each pixel has been independently dithered to 8 – bits accuracy over 16 consecutive screen displays, where each frame causes a change in the matrix which is used.

The apparatus shown in Figure 2 selects the appropriate matrix by reference to the t bits and the appropriate cell within the matrix by reference to the X and Y bits.

The Bayer matrix shown above may be constructed from the X and Y bits as follows: –

Dither bit 0 = X bit 1
Dither bit 1 = ( X && Y ) bit 1 ( && : logical AND)
Dither bit 2 = X bit 0
Dither bit 3 = ( X && Y ) bit 0

This construction can be used to generate the 15 other matrices. If we flip any of the bits of X and/or Y the resulting matrix may look different – it may be a rotation, a reflection, a translation, or some higher symmetry operation, – but it will still have the same properties as the original matrix. Consequently we can obtain 16 matrices with the properties we require by doing an exclusive OR of all the 16 values in the above matrix with the numbers 0 to F.

For example an exclusive OR with the value F will give

X

| Y | | | | |
|---|---|---|---|---|
| | F | 3 | C | 0 |
| | 7 | B | 4 | 8 |
| | D | 1 | E | 2 |
| | 5 | 9 | 6 | A |

This is a lateral reversal of the original matrix.

The original matrix was chosen to minimise the lower spatial frequencies. It is desirable to arrange the 16 matrices in an order to minimise the long period temporal frequencies at each pixel.

As a first step we can arrange the 16 matrices into 8 pairs such that the second one is the first one with all its bits reversed. We can continue in this way, arranging pairs into quartets where the second pair is the same as the first with the most significant bit flipped, and so on.

We will do the same for the other channels. To minimise the flicker we do not want any two channels to be the same. The following values are recommended

| t | Value to XOR with matrix | | | |
|---|---|---|---|---|
| | C | M | Y | K |
| 0 | 0 | F | 7 | 8 |
| 1 | F | 0 | 8 | 7 |
| 2 | 7 | 8 | 0 | F |
| 3 | 8 | 7 | F | 0 |
| 4 | 3 | C | 4 | B |
| 5 | C | 3 | B | 4 |
| 6 | 4 | B | 3 | C |
| 7 | B | 4 | C | 3 |
| 8 | 1 | E | 6 | 9 |
| 9 | E | 1 | 9 | 6 |
| A | 6 | 9 | 1 | E |
| B | 9 | 6 | E | 1 |
| C | 2 | D | 5 | A |
| D | D | 2 | A | 5 |
| E | 5 | A | 2 | D |
| F | A | 5 | D | 2 |

Figure 3 is a modified embodiment of one of the circuits, for example the circuit 5 in Figure 2. LUT T generates the 4 MSBs of the incoming value C while Table B generates the 4 LSBs of the incoming value C. The four LSBs from Table B are added to the 4 bit dither value from Table F (10) by adder 11A to produce a carry bit which is added by adder 11B to the four MSBs from Table T.

For each pixel in 16 consecutive frames displayed on the monitor the dither table F(10) will produce each of the values from 0 to F once. If the value coming out of Table B is N, the adder will generate the carry bit N times out of 16. Table T therefore contains the lower of the two output addresses to dither between, and B contains the fraction in sixteenths of the next value to be dithered.

Consider an example of an image pixel in which the colour component C has the value 57 (Hex). The dither matrix values output from LUT F(10) in this case for the particular pixel position: x = 0, y = 0 are as set out below, the carry bit from adder 11A and final 4 bit output from adder 11B also being shown.

| $F_{t(Hex)}$ | F(Hex) | Carry Bit | 4 Bit output (Decimal) |
|---|---|---|---|
| 0 | 0 | 0 | 5 |
| 1 | F | 1 | 6 |
| 2 | 7 | 0 | 5 |
| 3 | 8 | 0 | 5 |
| 4 | 3 | 0 | 5 |
| 5 | C | 1 | 6 |
| 6 | 4 | 0 | 5 |
| 7 | B | 1 | 6 |
| 8 | 1 | 0 | 5 |
| 9 | E | 1 | 6 |
| A | 6 | 0 | 5 |
| B | 9 | 1 | 6 |
| C | 2 | 0 | 5 |
| D | D | 1 | 6 |
| E | 5 | 0 | 5 |
| F | A | 1 | 6 |

The sum of the 4 bit outputs for the pixel over 16 consecutive frames is 57 (Hex) which is equal to the original input pixel value.

Consider the example of CMYK %dot colour space with cube intervals 0 – 15 at 0, 5, 10, 15, 20, 25, 30, 35, 40, 45, 50, 60, 70, 80, 90, and 100 % dot. We display all values beneath 0% dot as 0% dot by loading the input LUT values 0 – 25 with the value 00. We similarly display all values above 100% dot as 100% dot by loading the input LUT values above 100% dot with F0. Taking 37% dot as an example; this is approximately 6/16 of the way between 35% (cube interval 7 ) and 40% dot, so the input LUT 9 value number 99 (decimal) would be 76 (hexadecimal).

The output palette tables 12 – 11 contain the RGB values at each combination of the 16 points on each axis as embodied in the input look – up table. These have been drawn as being 8 bits per channel, but clearly they could be extended to 10 bits or more if necessary.

It should be understood that although the dither function has been illustrated in the drawings as being loaded into LUTs it could be defined by explicit logic.

It should also be noted that in the Figure 2 example, the number of bits from each channel is the same, namely 4. However, in other examples the number of bits from the channels could be different providing the total was 16 bits. This is advantageous since the human visual system has different sensitivity to different wave lengths; while in certain colour spaces such as CIELAB and HSV there is a requirement for greater precession in the lightness component than in a chromatic component.

If necessary the number of bits from the x,y, and t coordinates could differ from the example.

**Claims**

**1.** A method of converting digital data defining the colour content of pixels of an image in a first colour space into data defining the image in a second, different colour space suitable for displaying the image, the method comprising reducing the colour resolution of the data in the first colour space using a dither function which varies with time; and thereafter converting the reduced colour resolution first colour space data to the second colour space data.

2. A method according to claim 1, wherein the dither function defines a set of dither values which, for each pixel colour component, are selected in a predetermined, repeated sequence.

3. A method according to claim 1 or claim 2, wherein the dither function defines a matrix of dither values, each cell of the matrix (corresponding to an image pixel) containing a different value at any point in time.

4. A method according to any of the preceding claims, wherein each dither value comprises four bits which are added to the least significant bits of the colour component data.

5. A method according to any of the preceding claims, further comprising determining for each pixel the difference between the reduced colour resolution value for the pixel and the actual colour value to define an "error" and propagating the error to one or more other pixels prior to applying the method to those pixels.

6. Apparatus for converting digital data defining the colour content of pixels of an image in a first colour space into data defining the image in a second, different colour space suitable for displaying the image, the apparatus comprising dither means (2) for adding a dither function which varies with time to the first colour space data; means (2) for reducing the colour resolution of the data; and colour conversion means (3) for converting the reduced colour resolution first colour space data to second colour space data.

7. Apparatus according to claim 6, wherein the dither means comprises a set of look-up tables (LUTs) (10) one for the or each colour component, each LUT being addressed by signals (x,y,t) representing the location of the pixel within a dither matrix and the sampling time respectively so as to generate an appropriate dither value, the data from the look-up table being fed to an adder (11) to which is also fed the corresponding pixel colour component data and which supplies as the reduced resolution data the four MSBs of the resulting data value.

Fig. 1.

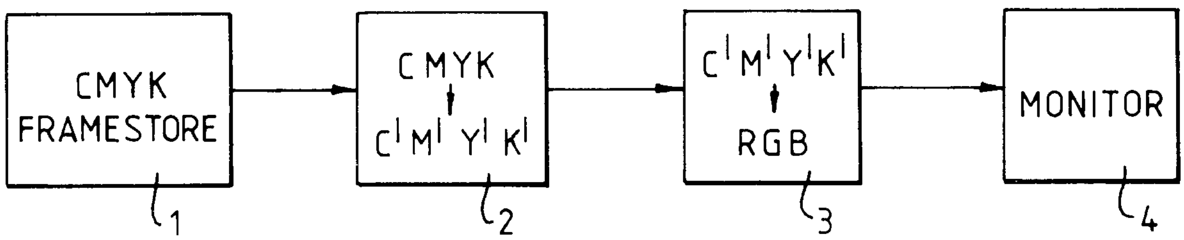
CMYK
FRAMESTORE
CMYK
C'M'Y'K'
C'M'Y'K'
RGB
MONITOR
1
2
3
4

Fig. 3.

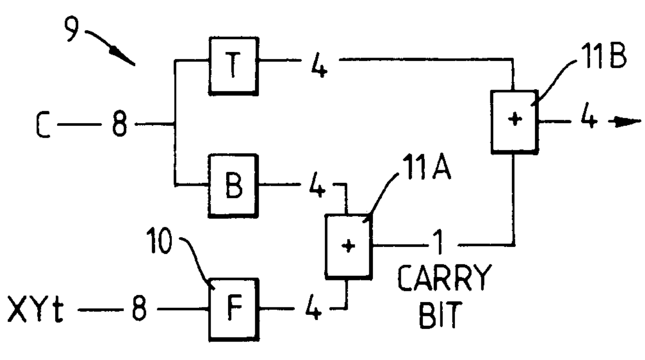
9
C
8
T
4
B
4
11B
+
4
11A
+
1
CARRY
BIT
10
XYt
8
F
4

Fig. 2.

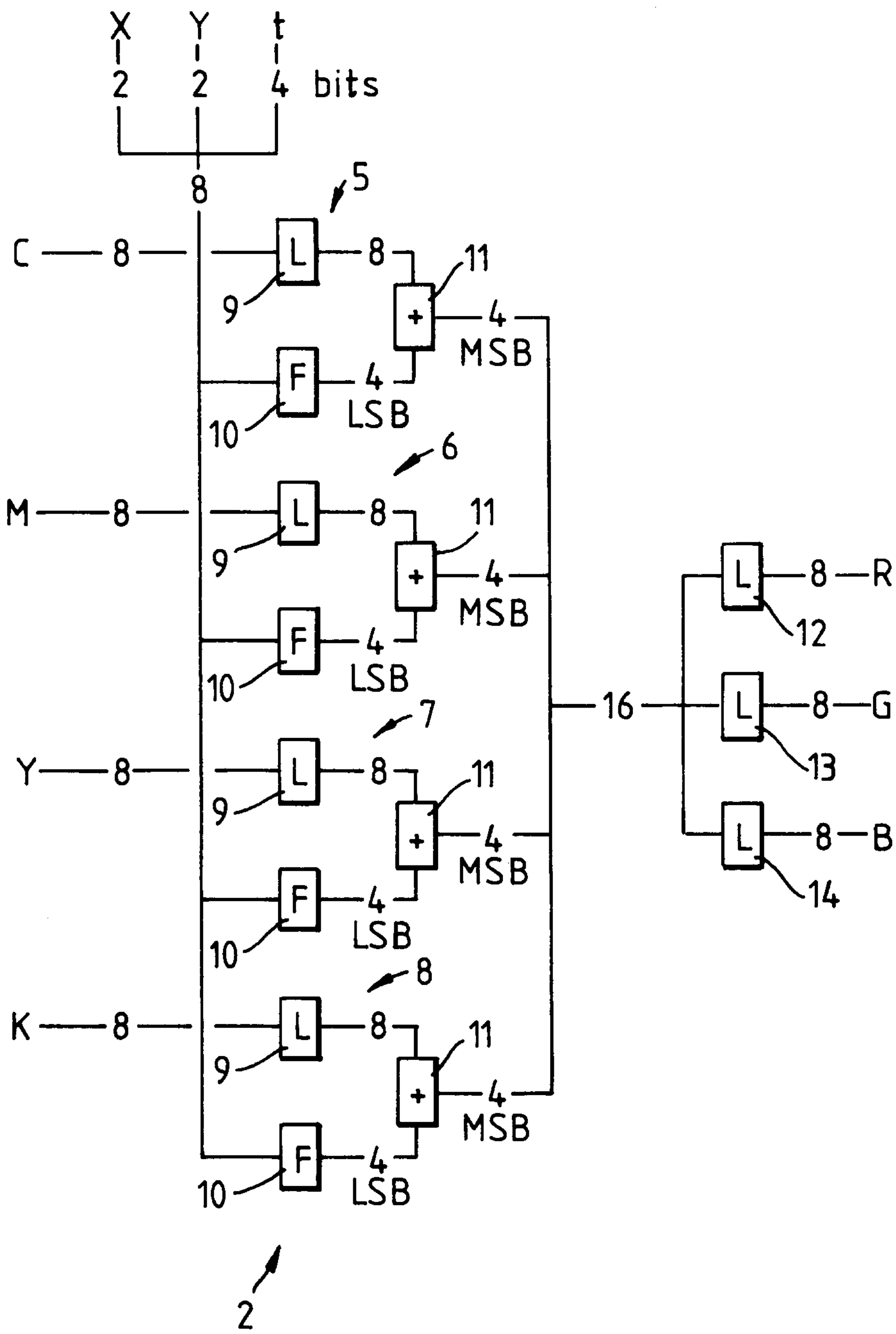
X
Y
t
2
2
4 bits
8
5
C
8
L
8
11
9
+
4
MSB
F
4
LSB
10
6
M
8
L
8
11
9
+
4
MSB
F
4
LSB
10
7
Y
8
L
8
11
9
+
4
MSB
F
4
LSB
10
8
K
8
L
8
11
9
+
4
MSB
F
4
LSB
10
2
16
L
8
R
12
L
8
G
13
L
8
B
14

European Patent Office

# EUROPEAN SEARCH REPORT

Application Number

EP 92 30 9791

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 338 457 (SCITEX CORPORATION LTD.) 25 October 1989<br>* abstract; figure 2 *<br>* column 5, line 44 - column 7, line 17 * | 1,6,7 | H04N1/46 |
| A | US-A-4 752 822 (KAWAMURA) 21 June 1988<br>* abstract; figures 20,21 *<br>* column 10, line 4 - line 41 * | 2,3 | |
| A | PATENT ABSTRACTS OF JAPAN vol. 13, no. 503 (E-844)13 November 1989 & JP-A-12 02 038 ( SONY CORP. ) 15 August 1989<br>* abstract *<br>* the whole document * | 4,5,7 | |
| | | | TECHNICAL FIELDS SEARCHED (Int. Cl.5) |
| | | | H04N |

The present search report has been drawn up for all claims

| Place of search | Date of completion of the search | Examiner |
|---|---|---|
| THE HAGUE | 18 JANUARY 1993 | REVELLIO H.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)